# EUROPEAN PATENT SPECIFICATION

(11) **EP 2 358 495 B1**
(45) Date of publication and mention of the grant of the patent: **05.03.2014**
(21) Application number: 09799126.9
(22) Date of filing: 10.11.2009
(51) Int. Cl.: B23H 1/10, B23H 7/36, B23H 9/04

(54) **DIELECTRIC FLUID BATH AND FLOW CONTROL METHOD FOR ELECTRICAL DISCHARGE MACHINES**
BAD FÜR DIELEKTRISCHE FLUSSIGKEIT UND VERFAHREN ZUR STEUERUNG DER FLÜSSIGKEITSSTRÖMUNG FÜR FUNKENEROSIONSMASCHINEN.
BAIN POUR FLUIDE DIÉLECTRIQUE ET PROCÉDÉ DE CONTRÔLE D'ÉCOULEMENT POUR MACHINES À DÉCHARGE ÉLECTRIQUE

(30) Priority: 18.11.2008 GB 0821041
(43) Date of publication of application: 24.08.2011
(73) Proprietor: Sarclad Limited, Sheepbridge S41 9RT (GB)
(72) Inventor: WYBROW, Mark, Chesterfield S41 9RT (GB)
(74) Representative: Fry, David John
(86) International application number: PCT/GB2009/002679
(87) International publication number: WO 2010/058154

(56) References cited:
- EP-A2- 0 304 235
- JP-A- 57 138 535
- JP-A- 59 152 027
- JP-A- 60 213 433
- JP-A- 61 241 022
- US-A- 5 243 168

## Description

This invention relates to an improved dielectric bath and flow control method for electro-discharge machining apparatus, in accordance with the preamble of claim 1 and claim 8, and more specifically to methods and apparatus for controlling flow of the dielectric fluid used in the electro-discharge technique (EDT).

Such a dielectric bath and flow control method are known from JP 61 241022 A.

EDT apparatus and methods for texturing the surface of an object such as a work roll are disclosed in the Applicant's earlier patents EP0294082, EP0304235 and EP0371962. The technique relies on a series of electrical discharges passing to a work roll surface from electrodes positioned adjacent to the work roll surface. An electric pulse is applied to the electrode/s to cause dielectric fluid present within the gap between the electrode and the work roll surface to break down such that electricity flows to the work roll surface and creates a spark/s. The spark/s causes the surface temperature of the work roll surface to rise rapidly and a small area of the work roll surface will melt producing a minute crater. Repetition of this process forms the basis of the EDT method to texture the work roll surface as required.

In a known arrangement, the electrodes of the EDT apparatus protrude into a bath of dielectric fluid contained within a gaiter which abuts at its open side against the adjacent work roll surface. Thus, the electrodes and the adjacent work roll surface are totally immersed in a common bath of dielectric fluid.

It is known to admit the dielectric fluid to the bath through either a single nozzle or a series of nozzles dispersed along the bath. However, it has been found that the existing method and apparatus for filling the dielectric bath are slow, create undesirable spray, spillage of the dielectric fluid from the bath and flow patterns that affect the process.

For an EDT machine to operate at optimum efficiency the flow pattern with the dielectric bath must be optimised. To ensure that the dielectric fluid remains free of contaminants during the machining process, it is necessary to "draw off" parts of the fluid and encourage a desired flow pattern. The flow pattern within the bath is closely related to the efficiency of the EDT apparatus.

Traditionally, electrical discharge machining flushes a single electrode to remove any machining debris. In this arrangement local flow is sufficient for debris to be removed. With the arrangement of improved EDT apparatus this is made more difficult because multiple electrodes on a electrode holder are attached to and moveable using a "drop arm", which holds the electrodes in the bath. The drop arm traverses from the rear wall of the bath to the front of the bath near to the roll surface. The electrodes are brought as close as possible to the front of the bath, which restricts access at the front of the bath and so restricts flow in that area. Thus, it is necessary to consider the flow around the entire bath in order to ensure the EDT apparatus operates efficiently.

Furthermore, it is necessary to remove fluid, and control the flow pattern whilst maintaining the level of the dielectric fluid within the bath to ensure that the process is safe. If the level of dielectric fluid falls below the required level, such that the electrode/s and work roll surface are not immersed in the dielectric fluid, there is a risk of fire. Existing floating sensors are placed on the surface of the dielectric fluid to detect changes in the dielectric fluid level. However, such sensors can become blocked by the additives present in the dielectric fluid and so often become unreliable. Alternatively, pneumatic switches are used. However, such switches alone are in some configurations not accurate enough to consistently measure the level of fluid. Existing sensors can also be accidentally moved or adjusted by the operators of the EDT machines when setting up the apparatus, leading to inaccurate measurements.

The present invention provides flow control methods and apparatus, which alleviate the problems described above by providing an improved method and apparatus for controlling the electrical discharge technique in the dielectric bath.

In one aspect the present invention provides a dielectric bath in accordance with claim 1.

A two stage filling process and the use of baffles allow the flow of dielectric flow within the bath to be controlled. By controlling the flow of dielectric fluid, the stability and efficiency of the EDT machining process is improved. The baffles are used to create a defined flow around a group of electrodes used in the machining process. The use of additives in the dielectric fluid improve the machining process, but also introduce the problem of keeping the additive in suspension whilst also removing any machining debris from the fluid. By controlling flow it is possible to ensure that the bath does not contain debris or additive that has fallen out of suspension during the machining process. Thus, the maintenance of the apparatus is reduced and machining is more efficient and consistent.

More preferably, the at least one baffle means further comprises a plate adjacent and substantially parallel to the rear wall of the dielectric bath.

Inducing the dielectric fluid to flow around the outer walls of the dielectric bath ensures that a consistent amount of fluid passes across the front of the electrodes between the electrodes and the work roll surface. This increases the effiiciency of the EDT process.

Preferably, the or each nozzle for filling the bath expels fluid at a flow rate of about 50 litres/minute, such that the total flow rate from all nozzles is less than or equal to about 50 litres/minute.

Within this specification, the term "about" is interpreted to mean optionally ±20%, preferably optionally ±10%, more preferably optionally ±5%.

At a flow rate of 50 litres/minute the dielectric bath can be filled sufficiently quickly, whilst the spray and spillage of dielectric fluid from the bath can be minimised.

Preferably, the or each nozzle comprises an aperture in the wall of a tubular member.

Preferably, the apparatus further comprises at least one fluid level monitoring device.

By accurately monitoring the level of dielectric fluid in the dielectric bath, the safety of the EDT machine can be checked to ensure that the level does not fall below the legal and safe limit for operation.

Preferably, the or each fluid level monitoring device is positioned in or adjacent to an overflow channel of the dielectric bath.

A monitoring device positioned in or adjacent to the overflow channel is less likely to be accidentally moved or adjusted by the operator of the EDT machine. Thus, the accuracy of the monitoring of the fluid level is improved.

Preferably, the apparatus further comprises a signal means to indicate when the dielectric fluid level is less than the predetermined level.

By signalling when the dielectric fluid level has fallen below a safe limit the risk of fire is reduced because an operator can stop operation of the apparatus if the electrode and work roll surface are not immersed in the dielectric fluid.

In a second aspect, the present invention provides a flow control method in accordance with claim 8.

Preferably the flow control method further comprises the step of monitoring the flow of the fluid out of the bath to detect when the level of dielectric fluid in the bath falls below the predetermined level.

Preferably, the flow control method further comprises the step of triggering a signal on detecting that the level of dielectric fluid in the bath has fallen below the predetermined level.

Preferably, the flow control method further comprises the step of adjusting the speed or rate at which fluid is expelled into the bath on detecting that the level of dielectric fluid in the bath has fallen below the predetermined level.

For the purposes of clarity and a concise description, features are described herein as part of the same or separate embodiments; however it will be appreciated that the scope of the invention may include embodiments having combinations of all or some of the features described.

The invention will now be described by way of example with reference to the accompanying diagrammatic drawings, in which:-
Figure 1 is an elevation view (from the front of the bath towards the rear of the bath) of the front wall of a dielectric bath constructed in accordance with a first embodiment of the present invention;
Figure 2 is a schematic cross sectional view of the dielectric bath shown in Figure 1, illustrating a flow pattern in accordance with the first embodiment of the present invention;
Figure 3 is a schematic cross sectional view from the side of a dielectric bath showing a flow pattern in accordance with the first embodiment of the present invention;
Figure 4 is a schematic cross sectional view from the side of a dielectric bath in accordance with a second embodiment of the present invention; and
Figure 5 is a schematic cross sectional view from the side of a dielectric bath showing a flow pattern in accordance with a third embodiment of the present invention.

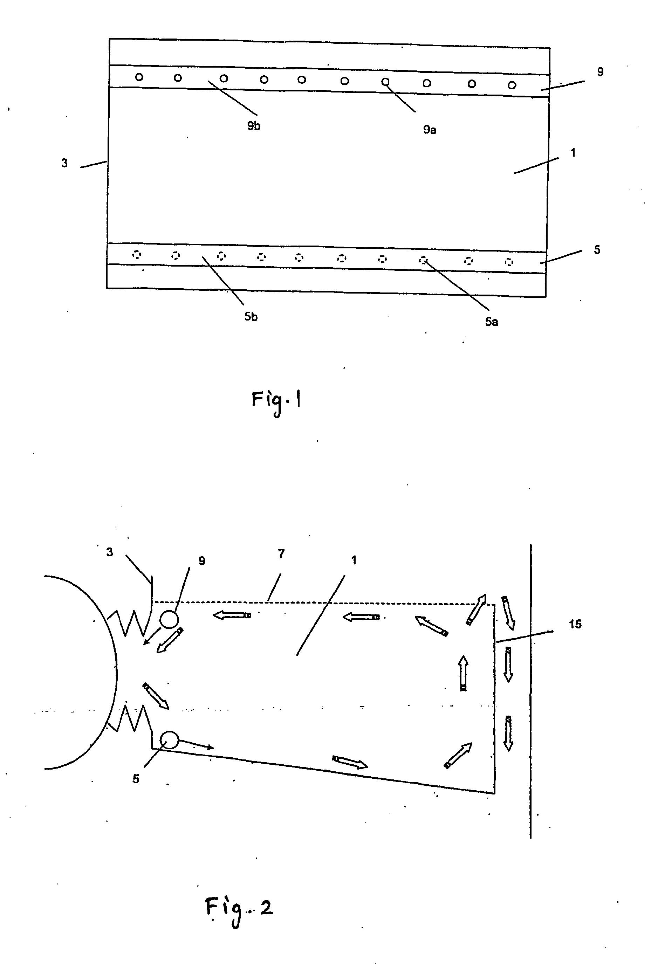

Referring to Figures 1 and 2, dielectric fluid 1 is admitted into a dielectric bath 3 slowly through a first series of nozzles 5 in a first stage of the filling process. The first nozzles 5 allow a high volume of dielectric fluid 1 to enter the dielectric bath 3. The nozzles 5 expel fluid into the bath 3 at a low flow speed but at a high flow rate of around 50 litres/minute. The nozzles 5 comprise multiple apertures 5a in a piece of tubing 5b, each of approximately 3mm diameter, through which the dielectric fluid 1 is expelled. The apertures 5a are shown in Figure 1 to be towards the rear of the piece of tubing 5b, that is, facing the front wall of the bath 3. Alternative nozzle configurations are also envisaged. The length of the tubing 5a extends between the side walls of the dielectric bath substantially parallel to the front wall of the bath 3. When the dielectric fluid 1 reaches a predetermined level 7, the flow through the first nozzles 5 is reduced or stopped.

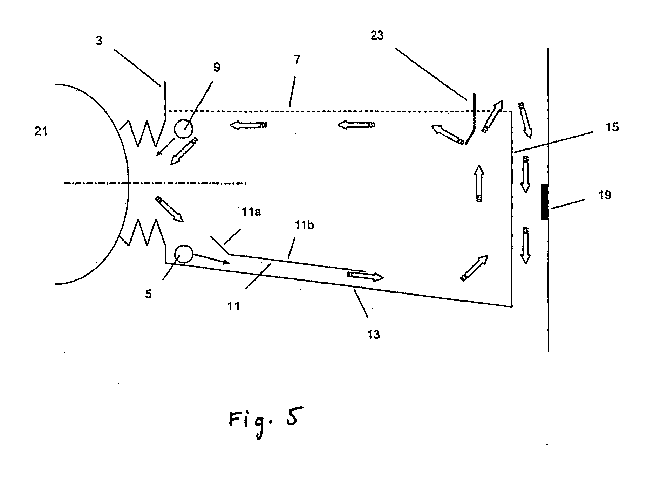

Figures 2, 3, 4 and 5 depict flow from the nozzles, 5, 9 as arrows with a single line. Induced flow is depicted as arrows outlined with double lines.

The level 7 of the dielectric bath 3 is predetermined by the height of a weir wall 15 positioned within the dielectric bath 3. The weir wall 15 extends parallel to the rear wall of the dielectric bath 3. In use, dielectric fluid 1 flows over the upper rim of the weir wall 15 to maintain a level 7 of dielectric fluid 1 in the dielectric bath 3 that is consistent with the height of the weir wall 15.

It is desirable for the dielectric fluid 1 to flow around the dielectric bath 3 and flow over the weir wall 15. This flow pattern is maintained during a second stage of the filling process. With no flow or reduced flow through the first nozzles 5, dielectric fluid 1 enters the bath 3 through a second series of nozzles 9. The nozzles 9 are below the level 7 of the dielectric fluid 1 and so are covered by the dielectric fluid 1. The nozzles 9 allow a lower volume of dielectric fluid 1 to enter the bath 3 during the second stage of filling. The nozzles 9 expel a finer flow of fluid 1 in a different direction to the fluid expelled through the first nozzles 5. The flow rate into the bath is approximately 50 litres/minute. It is envisaged that the flow from the second nozzle/s may be directed at an angle to the level of the dielectric fluid 7. The nozzles 9 comprise one or more apertures 9a in tubing 9b extending between the side walls of the dielectric bath 3. The apertures 9a, shown in Figure 1, are towards the front of the tubing 9b facing away from the rear wall of the bath 3. The length of the tubing 9b is substantially parallel to the front wall of the dielectric bath 3. The size of the apertures 5a, 9a is used to control the flow of the dielectric fluid 1 into the bath 3. It is envisaged that more complex nozzles can also be used.

Figure 2 shows the flow pattern that is created within the volume of dielectric fluid 1 contained with the bath 3. The flow of dielectric fluid 1 from the second nozzles 9 into the bath 3 is controlled to determine the flow pattern within the bath 3. The nozzles 9 force fluid into the dielectric bath 3 to "push" the flow pattern in the desired direction at the desired speed.

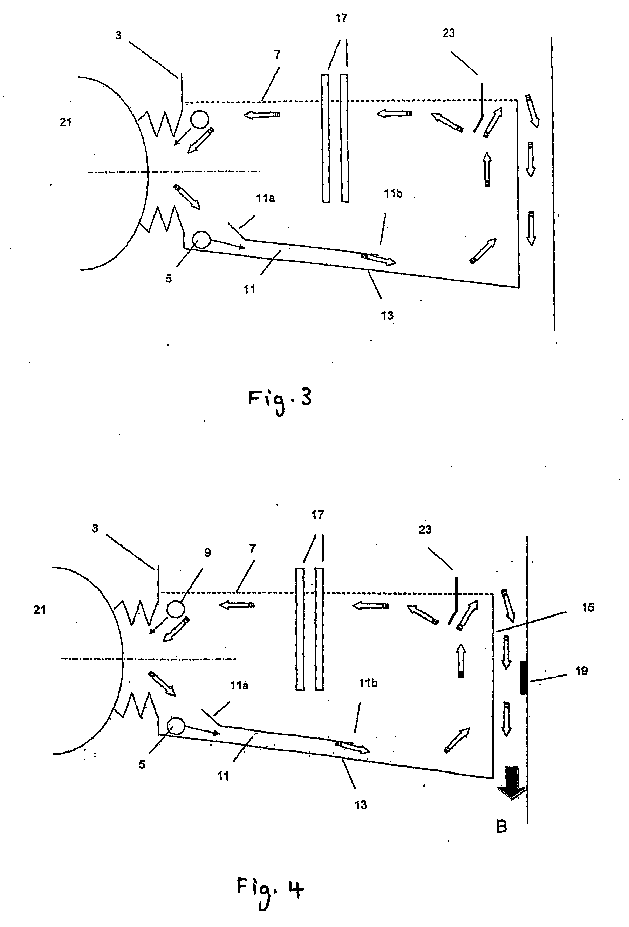

Referring to Figure 3, a baffle plate 11 is provided to create the desired flow pattern of the dielectric fluid during texturing of a work roll surface 21. The baffle plate 11 is made of a metal material and comprises a first section 11a adjacent to the high flow rate nozzles 5. A second section 11b of the baffle plate 11 is positioned adjacent to the base wall 13 of the dielectric bath 3 and extends substantially parallel to the base wall 13. The baffle plate 11 effectively creates a flow channel along the base wall of the dielectric bath 3, such that when fluid is expelled through nozzles 5 there is an anti-clockwise flow pattern of fluid moving from the front wall of the bath 3 to the rear wall of the bath 3.

In use, fluid is expelled from the nozzle 5 and is forced under the baffle plate 11 so that fluid is drawn from the front wall of the dielectric bath 3 towards the rear wall.

A further baffle (not shown) can also extend adjacent to the front wall of the dielectric bath 1. The baffle is above and substantially parallel to the level 7 of the dielectric fluid 1. This second baffle will act to break any turbulence in flow at the surface of the dielectric fluid caused by the finer flow of fluid entering the dielectric bath 3 through the nozzles 9.

Level sensing pneumatic switches 17 are positioned in the fluid and extend parallel to the side walls of the dielectric bath 1. Each switch 17 comprises a tube containing a column of compressed air beneath a diaphragm at the top of the tube. The dielectric fluid 1 in the bath 3 blocks the base of each tube and, as the fluid level in the bath rises, the air in the tube is compressed and the diaphragm at the top of the tube is pushed up to activate a switch.

Referring to Figure 4, the dielectric fluid 1 is introduced into the dielectric bath 3 through the nozzles 5, 9. When the level of the dielectric fluid 1 exceeds a predetermined level 7, which corresponds to the height of the weir wall 15, the dielectric fluid 1 flows over the weir wall 15 to a drain outlet and is collected, as indicated by arrow B. The collected dielectric fluid 1 is returned to a source tank from which it is fed back into the dielectric bath 3 and re-circulated. A sensor 19 is positioned in the flow channel running between the weir wall 15 and the rear wall of the dielectric bath 3. The sensor 19 can detect fluid flow by ultrasonic or capacitive means.

In use, when dielectric fluid 1 flows over the top of the weir wall 15, the switches 17 and/or sensor 19 detect the fluid level and the flow of dielectric fluid 1, which indicates to an operator that the dielectric fluid 1 is at a predetermined level 7 for safe and effective operation of the EDT apparatus. If the switches or sensor 17, 19 do not detect flow of dielectric fluid 1 over the weir wall 15 and/or a safe level of fluid in the bath, an alarm signal is emitted to indicate that the level of the dielectric fluid 1 has fallen below the predetermined fluid level 7. The alarm signal emitted by the sensor 19 will trigger a safety interlock. When the safety interlock is activated it will break the enable line to the power supply to prevent the flow of power to the electrodes. Activation of the safety interlock will also be reported to the operator via the user interface of the control system of the apparatus. In an alternative embodiment of the invention, it is also envisaged that a further sensor can be fixed at the top of the weir wall.

In use, a drop arm (not shown) is inserted into the dielectric bath 3 and is moveable between the rear wall and the front wall of the dielectric bath 3. The drop arm supports an array of electrodes. An electric pulse is applied to the electrode/s to cause the dielectric fluid 1 present in the gap between the electrode and the work roll surface 21 to break down such that electricity flows to the work roll surface 21 and creates a spark/s. The spark/s causes the surface temperature of the work roll surface 21 to rise rapidly and a small area of the work roll surface 21 will melt producing a minute crater. Repetition of this process forms the basis of the EDT method to texture the work roll surface 21 as required.

As shown in Figures 3, 4 and 5, a further baffle plate 23 can also be used to shape the flow of the dielectric fluid at the rear wall of the dielectric bath 3. The baffle plate 23 is a vertical or near vertical plate that divides the flow of the dielectric fluid at the rear of the dielectric bath 3. It redirects a portion of the flow directly over the weir wall 15 and a portion forwards towards the front wall of the dielectric bath 3. This reduces the velocity of the fluid that flows forwards towards the front wall and provides a more stable flow of dielectric fluid around the dielectric bath 3.

The above described embodiment has been given by way of example only, and the skilled reader will naturally appreciate that many variations could be made thereto without departing from the scope of the appended claims.

## Claims

1. Dieletric fluid bath (3) for an electric discharge apparatus for producing on a surface of an electrically conductive workpiece a textured or matt finish comprising an apparatus for controlling the flow within said bath of the dielectric fluid (1), wherein said apparatus comprises:
at least one nozzle (5) for expelling fluid (1) to fill the bath (3) to a predetermined dielectric fluid level (7);
at least one nozzle (9) for expelling fluid (1) into the bath (3) to induce flow of the dielectric fluid (1) contained therein; **characterized by** said apparatus comprising
at least one baffle plate (11b) adjacent and substantially parallel to the base of the dielectric bath (3) to direct flow of the dielectric fluid.

2. Dielectric fluid bath (3) according to claim 1, further comprising at least one baffle plate adjacent and substantially parallel to the rear wall of the dielectric bath.

3. Dielectric fluid bath (3) according to claim 1 or claim 2, wherein the or each nozzle (5, 9) for filling the bath (3) expels fluid at a flow rate of 50 litres/minute.

4. Dielectric fluid bath (3) according to any one of claims 1 to 3, wherein the or each nozzle (5, 9) comprises an aperture (5a, 9a) in the wall of a tubular member (5b, 9b).

5. Dielectric fluid bath (3) according to any one of claims 1 to 4, further comprising at least one fluid level monitoring device (17, 19).

6. Dielectric fluid bath (3) according to claim 5, wherein the or each fluid level monitoring devise (19) is positioned in or adjacent to an overflow channel of the dielectric bath (3)

7. Dielectric fluid bath (3) according to any preceding claim, further comprising a signal means to indicate when the dielectric fluid level is less than the predetermined level (7).

8. A flow control method for a bath (3) of dielectric fluid (1) of an electric discharge apparatus for producing on a surface or an electrically conductive work piece a textured or matt finish wherein the method comprises the steps of :
filling the bath (3) to a predetermined dielectric fluid level (7) ;
**characterised by**:
expelling fluid (1) into the bath (3) to induce flow of the dielectric fluid (1) around and out of the bath (3) wherein flow of the dielectric fluid (1) is directed by at least one baffle plate located adjacent and substantially parallel to the base of the bath.

9. A flow control method for a bath (3) of dielectric fluid (1) according to claim 8 further comprising the step of monitoring the flow of the fluid out of the bath to detect when the level of dielectric fluid (1) in the bath (3) falls below the predetermined level.

10. A flow control method for a bath (3) of dielectric fluid (1) according to claim 8 or claim 9 further comprising the step of triggering a signal on detecting that the level of dielectric fluid (1) in the bath (3) has fallen below the predetermined level (7).

11. A flow control method for a bath (3) of dielectric fluid (1) according to any one of claims 8 to 10, further comprising the step of adjusting the speed or rate at which the fluid (1) is expelled into the bath (3) on detecting that the level of dielectric fluid (1) in the bath has fallen below the predetermined level (7).

## Patentansprüche

1. Bad (3) mit dielektrischer Flüssigkeit für eine Erodiervorrichtung zum Herstellen eines strukturierten oder matten Finishs auf einer Oberfläche eines elektrisch leitfähigen Werkstücks, wobei das Bad eine Vorrichtung zum Steuern des Flusses in dem Bad der dielektrischen Flüssigkeit (1) umfasst, wobei die Vorrichtung Folgendes umfasst:
mindestens eine Düse (5) zum Ausstoßen von Flüssigkeit (1), um das Bad (3) auf einen vorher festgelegten Pegel (7) der dielektrischen Flüssigkeit zu befüllen;
mindestens eine Düse (9) zum Ausstoßen von Flüssigkeit (1) in das Bad (3), um einen Fluss der darin enthaltenen dielektrischen Flüssigkeit (1) zu induzieren;
**dadurch gekennzeichnet, dass** die Vorrichtung Folgendes umfasst:
mindestens ein Leitblech (11b), das zu der Basis des Dielektrikumsbads (3) benachbart und im Wesentlichen parallel zu dieser ist, um den Fluss der dielektrischen Flüssigkeit zu leiten.

2. Bad (3) mit dielektrischer Flüssigkeit nach Anspruch 1, das weiterhin mindestens ein Leitblech umfasst, das zu der Rückwand des Dielektrikumsbads benachbart und im Wesentlichen parallel zu dieser ist.

3. Bad (3) mit dielektrischer Flüssigkeit nach Anspruch 1 oder 2, wobei die oder jede Düse (5, 9) zum Befüllen des Bads (3) Flüssigkeit mit einer Flussgeschwindigkeit von 50 Liter/Minute ausstößt.

4. Bad (3) mit dielektrischer Flüssigkeit nach einem der Ansprüche 1 bis 3, wobei die oder jede Düse (5, 9) eine Öffnung (5a, 9a) in der Wand eines rohrförmigen Elements (5b, 9b) umfasst.

5. Bad (3) mit dielektrischer Flüssigkeit nach einem der Ansprüche 1 bis 4, das weiterhin mindestens ein Flüssigkeitspegelüberwachungsgerät (17, 19) umfasst.

6. Bad (3) mit dielektrischer Flüssigkeit nach Anspruch 5, wobei das oder jedes Flüssigkeitspegelüberwachungsgerät (19) in oder benachbart zu einem Überlaufkanal des Dielektrikumsbads (3) angeordnet ist.

7. Bad (3) mit dielektrischer Flüssigkeit nach einem vorhergehenden Anspruch, das weiterhin ein Signalmittel zum Anzeigen, wenn der Pegel der dielektrischen Flüssigkeit niedriger als der vorher festgelegte Pegel (7) ist, umfasst.

8. Flussregelungsverfahren für ein Bad (3) von dielektrischer Flüssigkeit (1) einer Erodiervorrichtung zum Herstellen eines strukturierten oder matten Finishs auf einer Oberfläche eines elektrisch leitfähigen Werkstücks, wobei das Verfahren die folgenden Schritte umfasst:
Befüllen des Bads (3) auf einen vorher festgelegten Pegel (7) der dielektrischen Flüssigkeit;
**gekennzeichnet durch**:
Ausstoßen von Flüssigkeit (1) in das Bad (3), um einen Fluss der dielektrischen Flüssigkeit (1) um das Bad herum und aus dem Bad (3) heraus zu induzieren, wobei der Fluss der dielektrischen Flüssigkeit (1) von mindestens einem Leitblech geleitet wird, das sich benachbart und im Wesentlichen parallel zu der Basis des Bads befindet.

9. Flussregelungsverfahren für ein Bad (3) von dielektrischer Flüssigkeit (1) nach Anspruch 8, das weiterhin den Schritt des Überwachens des Flusses der Flüssigkeit aus dem Bad heraus umfasst, um zu erfassen, wenn der Pegel der dielektrischen Flüssigkeit (1) in dem Bad (3) unter den vorher festgelegten Pegel fällt.

10. Flussregelungsverfahren für ein Bad (3) von dielektrischer Flüssigkeit (1) nach Anspruch 8 oder 9, das weiterhin den Schritt des Auslösens eines Signals bei Erfassen, dass der Pegel der dielektrischen Flüssigkeit (1) in dem Bad (3) unter den vorher festgelegten Pegel (7) gefallen ist, umfasst.

11. Flussregelungsverfahren für ein Bad (3) von dielektrischer Flüssigkeit (1) nach einem der Ansprüche 8 bis 10, das weiterhin den Schritt des Anpassens der Geschwindigkeit oder Rate, mit der die Flüssigkeit (1) in das Bad (3) ausgestoßen wird, bei Erfassen, dass der Pegel der dielektrischen Flüssigkeit (1) in dem Bad unter den vorher festgelegten Pegel (7) gefallen ist, umfasst.

## Revendications

1. Bain de fluide diélectrique (3) pour un appareil de décharge électrique pour produire sur une surface d'une pièce à usiner électriquement conductrice un fini texture ou mat comprenant un appareil pour commander le flux au sein dudit bain du fluide diélectrique (1), dans lequel ledit appareil comprend :
au moins une tuyère (5) pour expulser du fluide (1) afin de remplir le bain (3) à un niveau de fluide diélectrique prédéterminé (7) ;
au moins une tuyère (9) pour expulser du fluide (1) dans le bain (3) afin d'induire le flux du fluide diélectrique (1) contenu en son sein ;
**caractérisé par** ledit appareil comprenant
au moins une chicane (11b) adjacente et essentiellement parallèle à la base du bain diélectrique (3) pour diriger le flux du fluide diélectrique.

2. Bain de fluide diélectrique (3) selon la revendication 1, comprenant en outre au moins une chicane adjacente et essentiellement parallèle à la paroi arrière du bain diélectrique.

3. Bain de fluide diélectrique (3) selon la revendication 1 ou la revendication 2, dans lequel la ou chaque tuyère (5, 9) pour remplir le bain (3) expulse du fluide à un débit de 50 litres/minute.

4. Bain de fluide diélectrique (3) selon l'une quelconque des revendications 1 à 3, dans lequel la ou chaque tuyère (5, 9) comprend une ouverture (5a, 9a) dans la paroi d'un élément tubulaire (5b, 9b).

5. Bain de fluide diélectrique (3) selon l'une quelconque des revendications 1 à 4, comprenant en outre au moins un dispositif de surveillance de niveau de fluide (17, 19).

6. Bain de fluide diélectrique (3) selon la revendication 5, dans lequel le ou chaque dispositif de surveillance de niveau de fluide (19) est positionné dans ou de manière adjacente à un canal de trop-plein du bain diélectrique (3).

7. Bain de fluide diélectrique (3) selon l'une quelconque des revendications précédentes, comprenant en outre un moyen de signal pour indiquer quand le niveau de fluide diélectrique est inférieur au niveau prédéterminé (7).

8. Procédé de commande de flux pour un bain (3) de fluide diélectrique (1) d'un appareil de décharge électrique pour produire sur une surface d'une pièce à usiner électriquement conductrice un fini texture ou mat, dans lequel le procédé comprend les étapes consistant à :
remplir le bain (3) à un niveau de fluide diélectrique prédéterminé (7) ;
**caractérisé par** :
expulser du fluide (1) dans le bain (3) afin d'induire le flux du fluide diélectrique (1) autour et hors du bain (3), dans lequel le flux du fluide diélectrique (1) est dirigé par au moins une chicane située de manière adjacente et essentiellement parallèle à la base du bain.

9. Procédé de commande de flux pour un bain (3) de fluide diélectrique (1) selon la revendication 8, comprenant en outre l'étape consistant à surveiller le flux du fluide hors du bain afin de détecter quand le niveau de fluide diélectrique (1) dans le bain (3) chute en dessous du niveau prédéterminé.

10. Procédé de commande de flux pour un bain (3) de fluide diélectrique (1) selon la revendication 8 ou la revendication 9, comprenant en outre l'étape consistant à déclencher un signal suite à la détection du fait que le niveau de fluide diélectrique (1) dans le bain (3) a chuté en dessous du niveau prédéterminé (7).

11. Procédé de commande de flux pour un bain (3) de fluide diélectrique (1) selon l'une quelconque des revendications 8 à 10, comprenant en outre l'étape consistant à ajuster la vitesse ou le débit auquel le fluide (1) est expulsé dans le bain (3) suite à la détection du fait que le niveau de fluide diélectrique (1) dans le bain a chuté en dessous du niveau prédéterminé (7).
